# EUROPÄISCHE PATENTSCHRIFT

(11) **EP 2 998 572 B1**
(45) Veröffentlichungstag und Bekanntmachung des Hinweises auf die Patenterteilung: **07.09.2016**
(21) Anmeldenummer: 14185815.9
(22) Anmeldetag: 22.09.2014
(51) Int. Cl.: F03D 1/06

(54) **Windenergieanlagenrotorblatt**
Wind energy plant rotor blade
Pale de rotor d'éoliennes

(43) Veröffentlichungstag der Anmeldung: 23.03.2016
(73) Patentinhaber: Best Blades GmbH, 21684 Stade (DE)
(72) Erfinder: Jörg, Spitzner, 22549 Hamburg (DE)
(74) Vertreter: Hansen, Jochen

(56) Entgegenhaltungen:
- EP-A2- 2 527 642
- WO-A2-2011/159091
- DE-A1-102008 003 411
- DE-B4-102008 052 858
- GB-A- 2 186 033

## Beschreibung

Die Erfindung betrifft ein Windenergieanlagenrotorblatt aufweisend eine Oberseite, eine Unterseite, eine Vorderkante, eine Hinterkante, eine Nabenbefestigung und eine Blattspitze, wobei das Windenergieanlagenrotorblatt in einen Nabenbereich, einen Mittelbereich und einen Blattspitzenbereich eingeteilt und ein Wurzelbereich von der Nabenbefestigung bis zur maximalen Blatttiefe definiert ist, wobei innerhalb des Windenergieanlagenrotorblattes ein radial nach außen verlaufender Luftleitkanal zur Leitung von abgesaugter Luft aus einem Absaugbereich zu einem im Blattspitzenbereich angeordneten Ausblasbereich vorgesehen ist und eine Grenzschichtabsaugung erfolgt, wobei die Absaugung der Luft auf der Oberseite des Windenergieanlagenrotorblattes erfolgt, und ein Grenzschichtzaun im Nabenbereich nahe der Nabenbefestigung zur Verhinderung einer Strömung in Richtung Nabenbefestigung vorgesehen ist.

Aus dem Stand der Technik sind unterschiedliche Windenergieanlagenrotorblätter bekannt, bei denen unterschiedliche Modifikationen in Bezug auf deren aerodynamisches Profil als auch in Bezug auf die aerodynamische Beeinflussung durch Grenzschichtabsaugung vorgesehen werden, wobei das Ziel der Optimierung von Windenergieanlagenrotorblättern immer die Verbesserung der Gesamtleistung der Windenergieanlage ist.

Nachfolgend wird der bekannte Stand der Technik näher betrachtet:
Die Druckschrift DE 10 2008 052 858 B9 beschreibt das Profil eines Rotorblatts einer Windenergieahlage mit einer Oberseite (Saugseite) und einer Unterseite (Druckseite) mit einer Skelettlinie und einer Sehne zwischen der Vorderkante und der Hinterkante des Profils, wobei die relative Profildicke mehr als 49% beträgt, die Hinterkante stumpf ausgebildet ist, die Skelettlinie einen S-Schlag aufweist und in einem Abschnitt zwischen 0% bis 60% der Profiltiefe des Profils unterhalb der Sehne verläuft, und die Saugseite und die Druckseite des Profils im hinteren Bereich jeweils eine konkave Kontur aufweisen.

Die Druckschrift EP 2 182 203 B1 beschreibt ein Rotorblatt für eine Windenergieanlage, bestehend aus einem ursprünglichen Rotorblatt und einer damit verbundenen Blattspitzenverlängerung, dadurch gekennzeichnet, dass die Blattspitzenverlängerung zwei glasfaserverstärkte Halbschalen aufweist, die miteinander und mit einem Endbereich des ursprünglichen Rotorblatts verklebt sind.

Die Druckschrift EP 2 292 926 A1 offenbart ein Rotorblatt einer Windenergieanlage, wobei der Wurzelbereich des optimierten Rotorblattes an der Vorderkante und bzw. oder der Hinterkante optimiert ausgebildet ist, so dass eine kontinuierliche Fortsetzung des Rotorhauptbereiches erzielt wird.

In der Druckschrift EP 2 527 642 wird ein Rotorblatt einer Windenergieanlage beschrieben, in dem ein annähernd radial nach außen verlaufender Luftleitkanal zur Leitung von abgesaugter Luft aus einem im Wurzelbereich angeordneten Absaugbereich zu einem Ausblasbereich vorgesehen ist, wobei eine Grenzschichtbeeinflussung, insbesondere Grenzschichtabsaugung ausschließlich im Bereich der Hinterkante erfolgen soll.

Die Druckschrift DE 10 2008 003 411 A1 beschreibt eine Familie von Flügelprofilen für eine Windturbinenschaufel beschrieben. Jedes Flügelprofil kann eine stumpfe Hinterkante, eine im Wesentlichen ovale Saugseite und eine im Wesentlichen S-förmige Druckseite enthalten.

Weiter ist aus der Druckschrift WO 2007/035758 A1 ein Rotorblatt mit einem Grenzschichtabsaugungs-System bekannt und folgendermaßen definiert: ein Lufteinlass, der sich im Wurzelbereich des Blattes befindet, ein Luftauslass im Blattspitzenbereich und ein Strömungskanal der im Inneren des Blattes angeordnet ist und den Lufteinlass sowie Luftauslass miteinander verbindet. Mit Hilfe der durch die Drehbewegung herrschenden Zentrifugalkraft wird die Luft vorzugsweise am Lufteinlass angesaugt und zum Luftauslass transportiert. Die Luft wird vorzugsweise komprimiert, während sie sich durch die Zentrifugalkraft durch den Strömungskanal bewegt. Die Absaugung der Grenzschicht erfolgt an der Oberfläche des Rotorblattes, wobei die Absaugung im Wesentlichen nahe der Hinterkante bzw. eher in ungeplanter Weise erfolgt.

In der Druckschrift DE 10 2012 111 195 A1 wird eine Rotorblattanordnung für eine Windkraftanlage beschrieben, wobei die Rotorblattanordnung aufweist: ein Rotorblatt mit Außenoberflächen, die eine Druckseite, eine Saugseite, eine Vorderkante und eine Hinterkante definieren, die sich jeweils im Wesentlichen in Spannenrichtung zwischen einer Spitze und einem Fuß erstrecken; und eine Blattvergrößerungsvorrichtung mit einem ersten Paneel und einem gegenüberliegenden zweiten Paneel, wobei sowohl das erste Paneel als auch das zweite Paneel eine Innenoberfläche und eine Außenoberfläche aufweisen, die sich jeweils zwischen einem proximalen Ende und einem distalen Ende erstrecken, wobei das distale Ende sowohl von dem ersten Paneel als auch dem zweiten Paneel in einer Standardbetriebsposition von dem Rotorblatt im Wesentlichen in Sehnenrichtung beabstandet ist.

Aus der Druckschrift CH 209 491 ist ein Propeller bekannt, bei dem eine selbstständige Grenzschichtbeeinflussung erfolgt. An der Oberfläche des inneren Bereiches des Propellers sind ein oder mehrere Absaugbereiche über Schlitze vorgesehen, die über mindestens einen radial nach außen geführten innerhalb des Propellers verlaufenden Luftleitkanal mit einem Ausblasbereich an der Propellerspitze verbunden sind. Über die Rotation wird die abgesaugte Luft mit Hilfe der Zentrifugalkraft passiv zur Propellerspitze transportiert und dort ausgeblasen. Zudem ist die Beeinflussung der transportierten Luftmengen über Regelventile und Drosselklappen möglich.

Die Druckschrift EP 1 760 310 A1 offenbart ein Rotorblatt einer Windenergieanlage, bei dem die Rotorblattfläche im Wurzelbereich deutlich vergrößert ist und so eine Leistungssteigerung des Gesamtsystems erfolgt. Das Rotorblattprofil ist im Wurzelbereich lang und weich auslaufend ausgebildet, wodurch eine schmale Hinterkante im Wurzelbereich ausgebildet wird. Die Gesamtfläche des Rotorblattes im Wurzelbereich wird hierbei um ein Vielfaches gegenüber konventionellen Wurzelbereichen von Rotorblättern erhöht.

Weiter ist aus der Druckschrift EP 2 204 577 A2 ein Rotorblattanbaukomponente bekannt, die an der Hinterkante des Rotorblattes zur Effizienzsteigerung in der Nähe des Wurzelbereiches angeordnet werden kann, so dass die Leistung der Windenergieanlage, an der die entsprechend ausgebildeten Rotorblätter angeordnet sind, effizienter betrieben werden kann, wobei die Anbaukomponente mit dem Rotorblatt in Art eines Hochauftriebsprofils ausbildbar ist.

Es wird hinsichtlich des allgemeinen Standes der Technik, insbesondere auch auf die inhaltlichen Ausführungen zu der Strömungslehre von Windenergieanlagenrotorblättern aus den zuvor genannten Druckschriften hingewiesen.

Die größten Probleme bei Windenergieanlagenrotorblättern liegen in der Strömungsanpassung der Luftströmung an die Oberseite eines Windenergieanlagenrotorblattes. Durch Optimierung der Luftströmung kann die Effizienz einer Windenergieanlage deutlich gesteigert werden.

Die im Stand der Technik bekannten Windenergieanlagenrotorblätter sind jedoch nicht in der Lage eine weitere Steigerung der Effizienz zu realisieren, so dass weiterhin Handlungsbedarf zur weiteren Verbesserung der Leistung einer neuen bzw. insbesondere auch von bestehenden Windenergieanlagen besteht.

Der vorliegenden Erfindung liegt die Aufgabe zugrunde, ein Windenergieanlagenrotorblatt in dessen Leistung derart zu verbessern, dass die sonst im Stand der Technik übliche und hinnehmbare laminare in turbulent umschlagende Strömung auf der Oberseite des Windenergieanlagenrotorblattes erheblich bzw. sogar gen Null reduziert wird und gleichzeitig die Effizienz durch Veränderung der Windenergieanlagenrotorblattgeometrie verbessert wird, wobei zumindest der Umschlagspunkt, in dem die laminare in eine turbulente Strömung umschlägt, möglichst weit zur Hinterkante hin verschoben werden soll.

Gelöst wird diese Aufgabe mit einem Windenergieanlagenrotorblatt nach Anspruch 1.

Es wurde erkannt, dass Windenergieanlagenrotorblätter nach mehrjährigen Gebrauch eine individuelle und rotorblattgeometrieabhängige Verschmutzungszone auf deren Oberseite aufweisen, die von Umwelteinflüssen herrührt und wobei diese in einem bestimmten Bereich erst beginnt. Dieser Bereich wurde näher untersucht und hierbei wurde festgestellt, dass die Strömung über diese im Stand der Technik bekannten Windenergieanlagenrotorblätter im Anfangspunkt der Verschmutzung einen Umschlag in der Strömung der strömenden Luft über die Oberfläche der Oberseite aufweisen. In diesem Anfangspunkt der Verschmutzung schlägt die Strömung von laminar in turbulent um, wobei sich Wirbel bilden, die Schmutzpartikel auf der Oberseite eines Windenergieanlagenrotorblattes ablagern.

Ausgehend von dieser Ausgangslage und Erkenntnis ist die zuvor genannte Aufgabe mit nachfolgenden Merkmalen eines Windenergieanlagenrotorblattes gelöst worden, wobei gleichzeitig die Verschmutzung der Oberseite eines Windenergieanlagenrotorblattes reduziert werden kann:
Die Hinterkante ist im Nabenbereich und wenigstens im daran angeschlossenen ersten Abschnitts des Mittelbereiches stumpf, breit und/oder abgeschnitten ausgebildet und läuft in Richtung des Blattspitzenbereiches aus, wobei diese über den Wurzelbereich in Richtung Blattspitze fortgeführt ist.

Ferner ist der Absaugbereich in dem Bereich, in dem sich eine laminare Luftströmung von der Oberseite rotorblattgeometriespezifisch ablöst, angeordnet, so dass ein Anlegen und Fortführen der laminaren Luftströmung an die weitere Oberfläche der Oberseite erfolgt, und der Absaugbereich beginnend beim oder nahe des Grenzschichtzauns im Nabenbereich sich bis in den Mittelbereich erstreckt, wobei der Absaugbereich über den Wurzelbereich in Richtung Blattspitze im Mittelbereich fortgeführt wird.

Durch diese Ausgestaltung erfolgt die Grenzschichtabsaugung somit genau im Ablösepunkt der laminaren Strömung. Die Ablösung beginnt etwa schon in der Mitte eines Windenergieanlagenrotorblattes, ist jedoch in radialer Richtung nach außen unterschiedlich verlaufend, wobei die Strömungsabrisskante sich im Bereich von 1/3 bis ca. 3/5 der Windenergieanlagenrotorblattlänge erheblich der Hinterkante annähernd und in diese hineinläuft.

Bei einem Umbau eines bestehenden Rotorblattes erfolgt eine Umkonstruktion des Nabenbereiches durch entsprechende Anbaukomponenten, wobei durch die Absaugung die laminare Strömung auf das neue Anbauteil geleitet bzw. angelegt wird und gerade auf diese Art und Weise Kraft im Nabenbereich zur Energieproduktion genutzt wird. Eine wesentliche Verlängerung der Blatttiefe im Nabenbereich hat sich als negativ herausgestellt und führt nicht zu den gewünschten Leistungssteigerungen, so dass es eben gerade nicht die Flächenvergrößerung ist, die eine Effizienzsteigerung und damit verbundene Energieproduktion bringt, sondern das Anlegen der laminaren Strömung bis nahezu oder bis zur Hinterkante. Es wird durch die diesseitige Merkmalskombination eine sehr große Fläche simuliert ohne diese tatsächlich bauen zu müssen, wobei jedoch gleichzeitig ein hoher Energiegewinn mit Steigerungswerten von bis zu 15 % jährlicher Energieertragsleistung realisiert werden.

Die Profilgeometrie des Windenergieanlagenrotorblattes entspricht hierbei einem Wortmann-unähnlichen Profil und keinesfalls einem Wortmann- oder Wortmannähnlichen Profil, da die Grenzschichtabsaugung beispielsweise mit einer in der EP 1 760 310 A1 beschriebenen Profilgeometrie aus technischen Gründen nicht effizient und sinnvoll ist.

Wichtig ist ebenfalls der Grenzschichtzaun, durch den ein begrenzter Profilanfang gebildet wird und so einen aerodynamisch günstigen Blattanschluss an die Nabe einer Windenergieanlage ermöglicht. Insbesondere bei Umbauten von bestehenden Windenergieanlagenrotorblättern hin zu einem erfindungsgemäßen Windenergieanlagenrotorblatt erfolgt kein fließender Übergang zur ursprünglichen Rotorblattgeometrie, da der Grenzschichtzaun nunmehr den Abschluss bildet.

Das zu verwendende Windenergieanlagenrotorblattprofil ist derart ausgebildet, dass der Bereich der stumpfen, breiten und/oder abgeschnitten ausgebildeten Hinterkante über die maximale Rotorblatttiefe in radialer Richtung in Richtung Blattspitze, dem Tip, nach außen reicht, was zu einer deutlichen Effizienzsteigerung führt.

Im Gegensatz zur EP 2 527 642 A1 erfolgt die Absaugung im Ablöse- bzw. Umschlagspunkt der laminaren Strömung und nicht erst an der Hinterkante des Windenergieanlagenrotorblattes. Vielmehr ist gerade die Absaugung im Ablösepunkt der entscheidende Faktor zur Erzielung der höheren Effizienz. Ebenso ist von dem Wortmann- bzw. Wortmann-ähnlichen Profil in Kombination mit einem stumpfen Profil mit der Grenzschichtabsaugung abzusehen.

Die Positionierung der Grenzschichtabsaugung erfolgt immer in Abhängigkeit der rotorblattgeometrieabhängigen Ablösegrenze der laminaren Strömung, wobei dies sowohl für den Bereich der Umbauten bestehender Windenergieanlagenrotorblätter als auch für die Neukonstruktion von Windenergieanlagenrotorblättern notwendig ist.

Im Gegensatz zur DE 10 2008 003 411 A1 sowie zur WO 2007/035758 A1 ist die diesseitige Profilausbildung derart ausgestaltet, dass die stumpfe, breite und/oder abgeschnittene Hinterkante über den Punkt mit maximaler Blatttiefe in radialer Richtung nach außen fortgeführt wird, um eine merkliche Effizienzsteigerung zu erzielen.

Es wurde erkannt, dass der Bereich, in dem die laminare Luftströmung in eine turbulente Luftströmung umschlägt, bei Verdrehung des Rotorblattes wandert, so dass hierzu eine Anpassung der Absauglinie, also dem Bereich, in dem in radialer Richtung eine Absaugung erfolgt, notwendig sein kann. Dieses Phänomen ist abhängig von der Anströmgeschwindigkeit und dem Blatteinstellwinkel.

Der Absaugbereich weist mehrere öffnen- und verschließbare Absaugsegmente auf, die in Abhängigkeit eines, bedingt durch eine Verdrehung des Rotorblattes an der Nabe zur Anpassung des Anstellwinkels des Rotorblattes zum Wind, wandernden Umschlagpunktes, in dem sich eine laminare Luftströmung von der Oberseite rotorblattgeometriespezifisch ablöst, geöffnet und/oder verschlossen werden, wobei sich eine veränderbare Absauglinie ausbildet.

Durch diese Ausgestaltung ist es möglich, eine sehr genaue Nachführung der Absaugung durchzuführen und so die Absauglinie an den Anstellwinkeln des Rotorblattes auf Grund einer Rotorblattverdrehung, wie es bei modernen Anlagen üblich ist, anzupassen. Dem sich verlagernden Umschlagspunkt bzw. der Linie der Umschlagpunkte erfolgt somit eine Nachführung der Absaugung durch Öffnen bzw. Schließen von einzelnen Absaugsegmenten.

Die Freischaltung der Absaugbereiche kann in Abhängigkeit des Anstellwinkels und der Windgeschwindigkeit erfolgen.

Die maximale Blatttiefe des Windenergieanlagenrotorblattes ist im Nabenbereich oder im ersten Abschnitt des Mittelbereichs vorgesehen und die Blatttiefe verringert sich von der maximalen Blatttiefe bis zum Grenzschichtzaun.

Der Absaugbereich ist in dem Oberflächenabschnitt 40 % der örtlichen Blatttiefe von der Vorderkante bis 5 % der örtlichen Blatttiefe von der Hinterkante angeordnet.

Ein ganz wichtiger Aspekt bei der Positionierung des radial angeordneten Absaugbereiches an der Oberseite des Windenergieanlagenrotorblattes ist es, dass zunächst beginnend bei dem Grenzschichtzaun der Absaugbereich nahezu in der Mitte des Rotorblattes angeordnet ist und erst nach dem Bereich der maximalen Blatttiefe rotorblattgeometriespezifisch an die Hinterkante allmählich herangeführt wird, wobei dies in Abhängigkeit des Strömungsumschlagspunktes, in dem die laminare in eine turbulente Strömung umschwenkt, erfolgt.

Selbstverständlich können unterschiedliche Absaugbereichszonen mit unterschiedlich groß dimensionierten Luftleitkanälen vorgesehen werden, wodurch weitere Verbesserungen möglich sind und was letztendlich zu unterschiedlichen Absaugvolumen, bedingt durch unterschiedliche Rotationsgeschwindigkeitsbereiche, führt.

Der Absaugbereich im Nabenbereich ist in dem Oberflächenabschnitt 40 % der örtlichen Blatttiefe von der Vorderkante bis 30 % der örtlichen Blatttiefe von der Hinterkante angeordnet.

Der oder die angeordneten bzw. anzuordnenden Grenzschichtzäune sind insbesondere im Radius verlaufend angeordnet. Gleichwohl ist auch die Ausgestaltung derart möglich, so dass eine durch die Rotation bewirkte Querströmung in Relation zu dem sich drehenden Rotorblattes optimal unterstützt wird, wobei der Grenzschichtzaun dann nicht dem Radius folgend ausgerichtet ist, sondern quasi quer über das Rotorblatt geführt ist.

Ein im Stand der Technik bekanntes Rotorblatt ist durch Anbaukomponenten umgerüstet.

Der Blattinnenkörper des Rotorblattes ist als Luftleitkanal genutzt. Es ist nicht notwendig, ein spezielles Rohr innerhalb des Rotorblattes zu verlegen, um die Luft von der Nabenseite zur Blattspitze zu transportieren. Es ist ausreichend die Nabenseite des Rotorblattes durch ein nahezu luftdichtes, bevorzugt vollständig luftdichtes Schott abzudichten und im Bereich der Blattspitze einen Auslassbereich vorzusehen. Besonders bevorzugt wird in der Blattspitze mithilfe eines Anbauteils mit integriertem Luftleitkanal eine entsprechende Anpassung vorgenommen, wodurch der Volumenstrom über den Luftleitkanal in der Blattspitze begrenzt ist, bevorzugt kann ebenfalls dort ein Ventil vorgesehen werden, das die Absaugung und somit die passive Grenzschichtbeeinflussung reguliert.

Die Anbaukomponenten sind segmentiert ausgebildet, wobei die direkte Montage an einer Windenergieanlage erfolgen kann.

Ein wichtiger Aspekt ist die Umrüstung von bestehenden Anlagen, wobei bei segmentierter Ausgestaltung zwei Mann eine Anlage in wenigen Tagen vollständig umrüsten können, wobei alle wesentlichen Komponenten in den segmentierten Anbauteilen vorgesehen sind und lediglich durch Anschleifen der bestehenden Windenergieanlagenrotorblätter im Anschluss anlaminiert werden können.

Die Blattspitze eines im Stand der Technik bekannten Rotorblattes ist durch eine das Rotorblatt in dessen Gesamtlänge nicht verlängernde Anbaukomponente umgerüstet.

Alternativ ist die Blattspitze eines im Stand der Technik bekannten Rotorblattes durch eine das Rotorblatt in dessen Gesamtlänge um 0,5 bis 7 m verlängernde Anbaukomponente umgerüstet. Insbesondere können hierbei Winglets angefügt oder auch verlängert werden sowie mit entsprechenden Auslassbereichen versehen werden.

Die segmentierten Anbaukomponenten weisen wenigstens einen Grenzschichtzaunabschnitt auf. Bei dieser Ausgestaltung können die Segmente vor Ort auf einfachste Weise aneinander gefügt werden, ohne dass dabei sehr genau auf die Positionierung geachtet werden muss. Jedes Segment weist wenigstens an einer Seite einen Grenzschichtzaun oder zumindest Grenzschichtzaunabschnitt auf, so dass die einzelnen Segmente begrenzte aerodynamische Flächen sind.

Im Luftleitkanal ist ein Ventil zur Steuerung der Grenzschichtbeeinflussung angeordnet.

Ein Verfahren zur Steuerung der Leistung einer Windenergieanlage mit der diesseits beanspruchten Grenzschichtabsaugung umfasst in einem leistungsfreien Bereich, einem Anlaufbereich, einem Arbeitsbereich und einem Maximalleistungsbereich, die Merkmale, dass
- im leistungsfreien Bereich und/oder im Maximalbereich keine Grenzschichtabsaugung,
- im Anlaufbereich eine maximal verfügbare Grenzschichtabsaugung und
- im Arbeitsbereich eine variable Grenzschichtabsaugung, beginnend bei kleiner Leistung mit einer maximalen Grenzschichtabsaugung und endet mit einer minimalen Grenzschichtabsaugung bei großer Leistung erfolgt. Hierdurch wird eine zusätzliche Verbesserung der Windenergieanlageneffizienz im unteren Leistungsbereich als auch im Anlaufbereich erzielt, so dass mehr Energie bei geringeren Windstärken produziert werden kann. Gleichwohl kann eine Überlastung bereits frühzeitig verhindert werden, wenn die Grenzschichtabsaugung auf ein Minimum herunter gefahren wird. Weiter verbessert wird das Verfahren zur Steuerung einer Windenergieanlage dadurch, dass bei Erreichen einer maximalen Nennleistung die Grenzschichtabsaugung deaktiviert wird. Das Erreichen einer maximalen Nennleistung erfolgt bereits bei einer niedrigeren Windgeschwindigkeit, so dass der Einsatz der Grenzschichtbeeinflussung rechtzeitig gestoppt werden kann, da ansonsten durch eine zu große Leistung der Generator der Windenergieanlage zerstört oder zumindest beschädigt werden würde.

Es sind Fördermittel zur aktiven Grenzschichtbeeinflussung durch Luftleitung innerhalb des Luftleitkanals vorgesehen, so dass Luft sowohl vom Absaugbereich zum Ausblasbereich als auch in entgegen gesetzter Richtung transportiert werden kann.

Die Öffnungen des Ansaugbereiches und/oder des Ausblasbereiches sind als Bohrungen und/oder Schlitzungen ausgebildet.

Die gesamten vorgestellten Verbesserungen sind insbesondere derart ausgelegt, dass diese auch als nachträgliche Anbaukomponenten auszulegen sind. Damit werden insgesamt auch die Anbaukomponenten beansprucht, die ein Rotorblatt der Standardausführung derart verbessern können, so dass ein Rotorblatt zumindest mit den Merkmalen des Hautpanspruchs ausgebildet ist. Hierzu ist ein erstes Anbauteil im Wurzelbereich derart ausgebildet, dass hier ein Aufsatzelement auf den normal kreisförmig ausgebildeten Wurzelbereich aufsetzbar ist und das eine stumpfe Hinterkante aufweist, an der ein Absaugbereich vorgesehen ist. Ein zweites Anbauteil ist für den Bereich der Blattspitze vorgesehen, so dass hier ein Ausblasbereich realisiert ist. Ein weiteres Teil zur nachträglichen Verbesserung eines Standardrotorblattes ist der Luftleitkanal für die Einbringung in den Innenraum des Rotorblattes. Zur Befestigung der Anbaukomponente können Standardbefestigungsverfahren, wie Laminieren, Schrauben, Kleben, Bolzen oder ähnliche Verfahren, die allesamt im Bereich der Rotorblatttechnik bekannt sind, angewendet werden.

Nachfolgend werden exemplarische Ausführungsbeispiele der Erfindung anhand der beiliegenden Zeichnungen detailliert beschrieben.

Darin zeigen:
- Fig. 1: eine schematische Darstellung eines Ausführungsbeispieles eines im Stand der Technik bekannten Windenergieanlagenrotorblattes mit dem erfindungsgemäßen Umbau;
- Fig. 2: eine schematische Darstellung eines zweiten Ausführungsbeispiels eines Windenergieanlagenrotorblattes als Neurotorblatt;
- Fig. 3: einen schematischen Querschnitt eines im Stand der Technik bekannten Windenergieanlagenrotorblattes mit Darstellung der Strömung und des Umschlagpunktes;
- Fig. 4: einen schematischen Querschnitt des erfindungsgemäßen Windenergieanlagenrotorblattes mit Darstellung der Strömung und des Umschlagpunktes;
- Fig. 5: eine schematische Darstellung eines dritten Ausführungsbeispiels eines Windenergieanlagenrotorblattes in segmentierter Bauweise in einer räumlichen Darstellung;
- Fig. 6: eine schematische Darstellung des aus Fig. 5 gezeigten dritten Ausführungsbeispiels eines Windenergieanlagenrotorblattes in segmentierter Bauweise in einer Aufsicht auf die Oberseite;
- Fig. 7: eine schematische Darstellung des in Fig. 1 gezeigten Windenergieanlagenrotorblattes mit Schnitten an unterschiedlichen Stellen des Windenergieanlagenrotorblattes mit unterschiedlichen Blatttiefen;
- Fig. 8: a) bis g) Querschnitte durch das in Fig. 1 gezeigte Windenergieanlagenrotorblatt mit Angabe der Verhältnisse r/R=..., wobei a) einen Schnitt bei 0,03, b) 0,05, c) 0,1, d) 0,2, e) 0,25, f) 0,3 und g) 0,4 / 0,5 von der Nabe beabstandet zeigt;
- Fig. 9: eine schematische Darstellung eines ersten Ausführungsbeispiels des erfindungsgemäßen Windenergieanlagenrotorblattes an einer Windenergieanlage;
- Fig. 10: eine schematische Darstellung eines zweiten Ausführungsbeispiels des erfindungsgemäßen Windenergieanlagenrotorblattes an einer Windenergieanlage und
- Fig. 11: eine schematische Darstellung eines dritten Ausführungsbeispiels des erfindungsgemäßen Windenergieanlagenrotorblattes an einer Windenergieanlage.

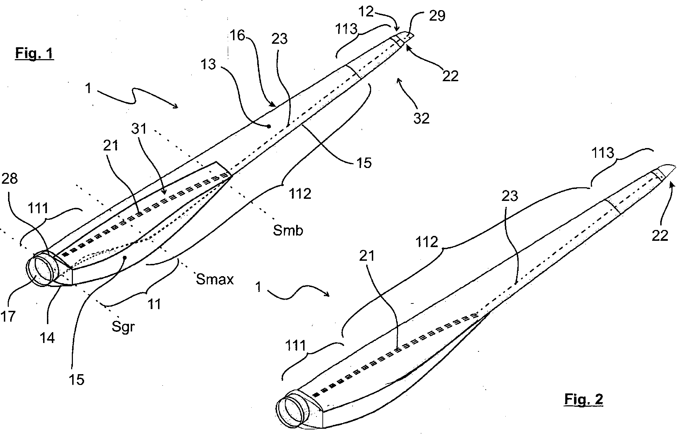

Fig. 1 zeigt eine schematische Darstellung eines Ausführungsbeispieles eines im Stand der Technik bekannten Windenergieanlagenrotorblattes 1 mit dem erfindungsgemäßen Umbau.

Das Windenergieanlagenrotorblatt 1 umfasst eine Blattspitze 12, eine Oberseite 13, eine Unterseite 14, eine Hinterkante 15, eine Vorderkante 16 und eine Nabenbefestigung 17.

Auf das bestehende Windenergieanlagenrotorblatt 1 ist ein Absauganbauteil 31 mit darin vorgesehenem Absaugbereich 21 sowie ein Ausblasanbauteil 32 mit verlängertem Rotorblatttip und Winglet 29 angeordnet. Es ist ferner der an dem Absaugbereich 21 angeordnete Luftleitkanal 23, der bis zum Ausblasbereich 22 geführt ist, dargestellt.

Das Windenergieanlagenrotorblatt 1 ist eingeteilt in einen Nabenbereich 111, einem Mittelbereich 112 und einem Blattspitzenbereich 113, die die jeweiligen Windenergieanlagenrotorblattabschnitte darstellen.

In dieser Darstellung ist gut die neu gestaltete Hinterkante 15, die durch das aufgesetzte Absauganbauteil 31 umgestaltet worden ist, zu erkennen. Die Hinterkante 15 ist nunmehr, beginnend bei dem neuen Grenzschichtzaun 28 bis zu dem Übergangspunkt in die alte Hinterkante 15 stumpf, breit und/oder abgeschnitten ausgebildet.

Ferner ist gut die Anordnung des Absaugbereiches 21 zu erkennen, der nicht wie im Stand der Technik bekannt an der Hinterkante 15, auf der Oberseite 13 nahe der Hinterkante 15 oder undefiniert in unklaren Bereichen der Oberseite 13 angeordnet ist, sondern entlang einer Umschlagspunktlinie angeordnet ist, in der die laminare Strömung der das Windenergieanlagenrotorblatt 1 umströmenden Luft in eine turbulente Strömung umschwenkt.

Nur durch diese sehr spezielle Ausgestaltung ist eine erhebliche Effizienzsteigerung gegenüber den im Stand der Technik bekannten Windenergieanlagenrotorblättern möglich.

Im Weiteren werden für gleiche Elemente die gleichen Bezugszeichen wie in Fig. 1 verwendet. Zu deren prinzipieller Funktion wird auf Fig. 1 verwiesen.

Fig. 2 zeigt eine schematische Darstellung eines zweiten Ausführungsbeispiels eines Windenergieanlagenrotorblattes 1 als Neurotorblatt.

Es sind der Absaugbereich 21, der Ausblasbereich 22 sowie der Luftleitkanal 23 dargestellt.

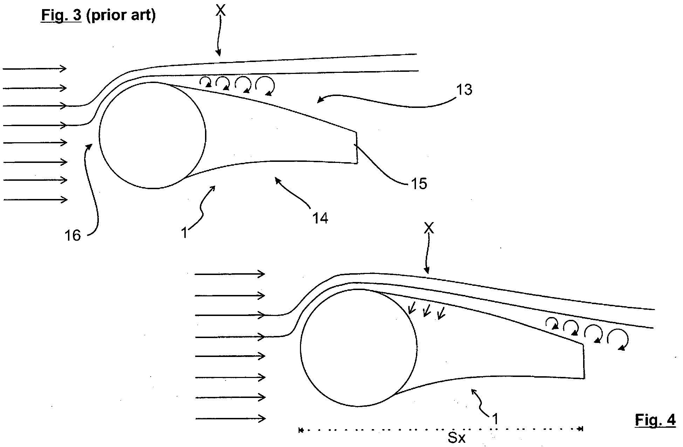

In Fig. 3 ist ein schematischer Querschnitt eines im Stand der Technik bekannten Windenergieanlagenrotorblattes 1 mit Darstellung der Strömung und des Umschlagpunktes X dargestellt.

Im Umschlagpunkt X beginnt die zunächst laminar anliegende Luftströmung in eine turbulente Luftströmung umzuschlagen, was zu einer Verschlechterung der Effizienz und zudem zu einer erhöhten Verschmutzung der Oberseite 13 des Windenergieanlagenrotorblattes 1 führt.

In Fig. 4 ist ein schematischer Querschnitt des erfindungsgemäßen Windenergieanlagenrotorblattes 1 mit Darstellung der Strömung und des Umschlagpunktes X dargestellt.

Durch die vorgesehene Absaugung im Absaugbereich 21 in Kombination mit der stumpfen, breiten und/oder abgeschnittenen Hinterkante 15 des Windenergieanlagenrotorblattes 1 erfolgt ein Anlegen der im Umschlagpunkt X noch laminaren Luftströmung an das zusätzlich angefügte flächige Element, wodurch der Energieertrag der gesamten Windenergieanlage W um ca. 15 % gesteigert wird. Die turbulente Strömung bildet sich erst viel später aus und führt in Kombination mit der stumpfen, breiten und/oder abgeschnittenen Hinterkante 15 zu einer weiteren Erhöhung der Energieertragsleistung der Windenergieanlage W.

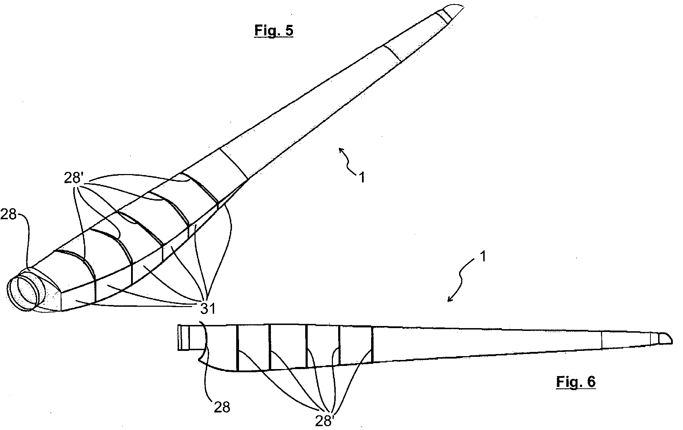

Fig. 5 zeigt eine schematische Darstellung eines dritten Ausführungsbeispiels eines Windenergieanlagenrotorblattes 1 in segmentierter Bauweise in einer räumlichen Darstellung.

Auf ein umzubauendes Windenergieanlagenrotorblatt 1 sind sechs Segmente des Absauganbauteils 31 aufgesetzt. Jedes einzelne dieser Segmente 31 weist an der in Vorderkantenblickrichtung linken Seite einen Grenzschichtzaun 28 bzw. 28' auf. Beim Zusammensetzen beispielsweise im freien Feld können so gute Übergänge aus aerodynamischer Sicht als auch aus Montagesicht realisiert werden.

Fig. 6 zeigt eine schematische Darstellung des aus Fig. 5 gezeigten dritten Ausführungsbeispiels eines Windenergieanlagenrotorblattes 1 in segmentierter Bauweise in einer Aufsicht auf die Oberseite 13.

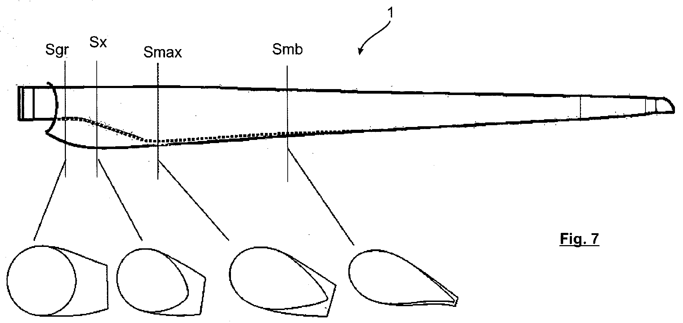

In Fig. 7 ist eine schematische Darstellung des in Fig. 1 gezeigten Windenergieanlagenrotorblattes 1 mit Schnitten an unterschiedlichen Stellen des Windenergieanlagenrotorblattes 1 mit unterschiedlichen Blatttiefen Smax, Sgr, Smb, Sx dargestellt.

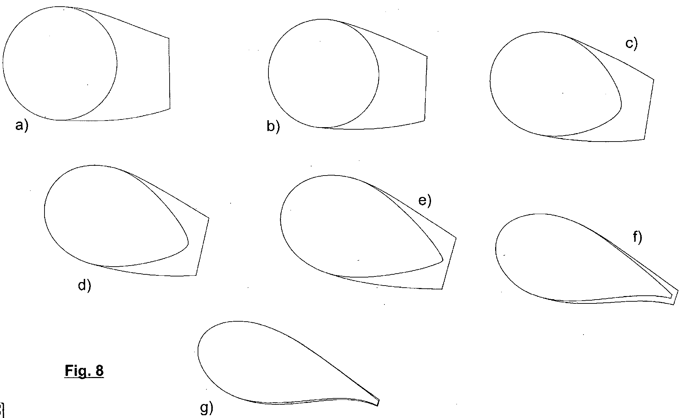

Die Fig. 8 a) bis g) zeigen Querschnitte durch das in Fig. 1 gezeigte Windenergieanlagenrotorblatt mit Angabe der Verhältnisse r/R=..., wobei a) einen Schnitt bei 0,03, b) 0,05, c) 0,1, d) 0,2, e) 0,25, f) 0,3 und g) 0,4 / 0,5 von der Nabe beabstandet darstellt.

Hierbei stellen die größeren Umfänge der Querschnitte das neue Design und die kleineren Querschnitte das ursprüngliche Design eines umgerüsteten Windenergieanlagenrotorblattes 1 dar.

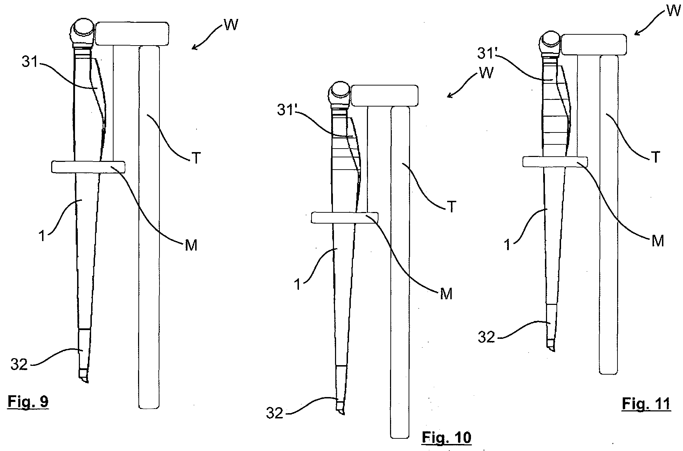

In Fig. 9, 10 und 11 sind schematische Darstellungen dreier Ausführungsbeispiele des erfindungsgemäßen Windenergieanlagenrotorblattes 1 an einer Windenergieanlage W dargestellt.

Die Windenergieanlage W besteht aus einem Windenergieanlagenturm T, der auf einem Fundament aufgesetzt ist; einem auf dem Windenergieanlagenturm T aufgesetzten Generatorgehäuse, an dem eine Nabe mit drei daran angeordneten Windenergieanlagenrotorblättern 1 vorgesehen ist.

Zum Umbau von bestehenden Windenergieanlagen W kann aus dem Generatorgehäuse eine Montagevorrichtung M bzw. Arbeitsbühne herabgelassen werden oder alternativ von unten an dem Windenergieanlagenturm T bzw. an dem Windenergieanlagenrotorblatt 1 hochgefahren werden, um das Absauganbauteil 31 bzw. das segmentiert ausgebildete Anbauteil 31' bzw. das Ausblasanbauteil 32 sowie den nicht dargestellten Luftleitkanal 23 zu montieren.

### Bezugszeichenliste

- 1: Windenergieanlagenrotorblatt
- 11: Wurzelbereich
- 111: Nabenbereich
- 112: Mittelbereich
- 113: Blattspitzenbereich
- 12: Blattspitze
- 13: Oberseite
- 14: Unterseite
- 15: Hinterkante
- 16: Vorderkante
- 17: Nabenbefestigung

- 21: Absaugbereich
- 22: Ausblasbereich
- 23: Luftleitkanal
- 28, 28': Grenzschichtzaun
- 29: Winglet

- 31, 31': Absauganbauteil
- 32: Ausblasanbauteil

- M: Montagevorrichtung
- Smax: maximale Blatttiefe/Schultertiefe
- Sgr: Blatt-/Schultertiefe im Bereich des Grenzschichtzaunes
- Smb: Blatt-/Schultertiefe im Bereich des Mittelbereiches
- Sx: örtliche Blatttiefe im Punkt des Rotorblattes
- T: Windenergieanlagenturm
- W: Windenergieanlage
- X: Umschlagpunkt laminar in turbulente Strömung
- →: Luftströmung

## Patentansprüche

1. Windenergieanlagenrotorblatt (1) aufweisend eine Oberseite (13), eine Unterseite (14), eine Vorderkante (16), eine Hinterkante (15), eine Nabenbefestigung (17) und eine Blattspitze (12), wobei das Windenergieanlagenrotorblatt (1) in einen Nabenbereich (111), einen Mittelbereich (112) und einen Blattspitzenbereich (113) eingeteilt und ein Wurzelbereich (11) von der Nabenbefestigung (17) bis zur maximalen Blatttiefe (Smax) definiert ist,
wobei
innerhalb des Windenergieanlagenrotorblattes (1) ein radial nach außen verlaufender Luftleitkanal (23) zur Leitung von abgesaugter Luft aus einem Absaugbereich (21) zu einem im Blattspitzenbereich (113) angeordneten Ausblasbereich (22) vorgesehen ist und eine Grenzschichtabsaugung erfolgt, wobei die Absaugung der Luft auf der Oberseite (13) des Windenergieanlagenrotorblattes (1) erfolgt,
und ein Grenzschichtzaun (28) im Nabenbereich (111) nahe der Nabenbefestigung (17) zur Verhinderung einer Strömung in Richtung Nabenbefestigung (17) vorgesehen ist, wobei
die Hinterkante (15) im Nabenbereich (111) und wenigstens im daran angeschlossenen ersten Abschnitt des Mittelbereiches (112) stumpf, breit und/oder abgeschnitten ausgebildet ist und in Richtung des Blattspitzenbereiches (113) ausläuft, **dadurch gekennzeichnet, dass** diese über den Wurzelbereich (11) in Richtung Blattspitze (12) fortgeführt ist,
der Absaugbereich (21) in dem Bereich, in dem sich eine laminare Luftströmung von der Oberseite (13) rotorblattgeometriespezifisch ablöst, angeordnet ist, so dass ein Anlegen und Fortführen der laminaren Luftströmung an die weitere Oberfläche der Oberseite (13) erfolgt, und
der Absaugbereich (21) beginnend beim oder nahe des Grenzschichtzauns (28) im Nabenbereich (111) sich bis in den Mittelbereich (112) erstreckt, wobei der Absaugbereich (21) über den Wurzelbereich (11) in Richtung Blattspitze (12) im Mittelbereich (112) fortgeführt wird.

2. Windenergieanlagenrotorblatt (1) nach Anspruch 1,
**dadurch gekennzeichnet, dass**
der Absaugbereich (21) mehrere öffnen- und verschließbare Absaugsegmente aufweist, die in Abhängigkeit eines, bedingt durch eine Verdrehung des Rotorblattes an der Nabe zur Anpassung des Anstellwinkels des Rotorblattes zum Wind, wandernden Umschlagpunktes (X), in dem sich eine laminare Luftströmung von der Oberseite (13) rotorblattgeometriespezifisch ablöst, geöffnet und/oder verschlossen werden, wobei sich eine veränderbare Absauglinie ausbildet.

3. Windenergieanlagenrotorblatt (1) nach Anspruch 1 oder 2,
**dadurch gekennzeichnet, dass**
die maximale Blatttiefe (Smax) des Windenergieanlagenrotorblattes (1) im Nabenbereich (111) oder im ersten Abschnitt des Mittelbereichs (112) vorgesehen ist und sich die Blatttiefe (Sgr) von der maximalen Blatttiefe (Smax) bis zum Grenzschichtzaun (28) verringert.

4. Windenergieanlagenrotorblatt (1) nach Anspruch 1, 2 oder 3,
**dadurch gekennzeichnet, dass**
der Absaugbereich (21) in dem Oberflächenabschnitt 40 % der örtlichen Blatttiefe (Sx) von der Vorderkante (16) bis 5 % der örtlichen Blatttiefe (Sx) von der Hinterkante (15) angeordnet ist.

5. Windenergieanlagenrotorblatt (1) nach Anspruch 4,
**dadurch gekennzeichnet, dass**
der Absaugbereich (21) im Nabenbereich (111) in dem Oberflächenabschnitt 40 % der örtlichen Blatttiefe (Sx) von der Vorderkante (16) bis 30 % der örtlichen Blatttiefe (Sx) von der Hinterkante (15) angeordnet ist.

6. Windenergieanlagenrotorblatt (1) nach einem der vorangehenden Ansprüche,
**dadurch gekennzeichnet, dass**
der Blattinnenkörper des Rotorblattes (1) als Luftleitkanal genutzt ist.

7. Windenergieanlagenrotorblatt (1) nach einem der vorangehenden Ansprüche,
**dadurch gekennzeichnet, dass**
ein im Stand der Technik bekanntes Rotorblatt durch Anbaukomponenten umgerüstet ist.

8. Windenergieanlagenrotorblatt (1) nach Anspruch 7,
**dadurch gekennzeichnet, dass**
die Anbaukomponenten segmentiert ausgebildet sind.

9. Windenergieanlagenrotorblatt (1) nach einem der vorangehenden Ansprüche,
**dadurch gekennzeichnet, dass**
die Blattspitze (12) eines im Stand der Technik bekannten Rotorblattes durch eine das Rotorblatt in dessen Gesamtlänge nicht verlängernde Anbaukomponente umgerüstet ist.

10. Windenergieanlagenrotorblatt (1) nach einem der Ansprüche 1 bis 9, **dadurch gekennzeichnet, dass**
die Blattspitze (12) eines im Stand der Technik bekannten Rotorblattes durch eine das Rotorblatt in dessen Gesamtlänge um 0,5 bis 7 m verlängernde Anbaukomponente umgerüstet ist.

11. Windenergieanlagenrotorblatt (1) nach einem der Ansprüche 8 bis 10, **dadurch gekennzeichnet, dass**
die segmentierten Anbaukomponenten wenigstens einen Grenzschichtzaunabschnitt (28, 28') aufweisen.

12. Windenergieanlagenrotorblatt (1) nach einem der vorangehenden Ansprüche,
**dadurch gekennzeichnet, dass**
im Luftleitkanal (23) ein Ventil zur Steuerung der Grenzschichtbeeinflussung angeordnet ist.

13. Windenergieanlagenrotorblatt (1) nach einem der vorangehenden Ansprüche,
**dadurch gekennzeichnet, dass**
Fördermittel zur aktiven Grenzschichtbeeinflussung durch Luftleitung innerhalb des Luftleitkanals (23) vorgesehen sind, so dass Luft sowohl vom Absaugbereich (21) zum Ausblasbereich (22) als auch in entgegen gesetzter Richtung transportiert werden kann.

14. Windenergieanlagenrotorblatt (1) nach einem der vorangehenden Ansprüche,
**dadurch gekennzeichnet, dass**
die Öffnungen des Ansaugbereiches (21) und/oder des Ausblasbereiches (22) als Bohrungen und/oder Schlitzungen ausgebildet sind.

## Claims

1. Wind turbine rotor blade (1) having a top side (13), a bottom side (14), a leading edge (16), a trailing edge (15), a hub fastening means (17) and a blade tip (12), wherein the wind turbine rotor blade (1) is divided into a hub region (111), a middle region (112) and a blade tip region (113) and a root region (11) is defined from the hub fastening means (17) to the maximum blade depth (Smax),
wherein
a radially outwardly extending air-conducting channel (23) is provided within the wind turbine rotor blade (1) for conducting suctioned air from a suction region (21) to a blow-out region (22) arranged in the blade tip region (113), and boundary layer suctioning occurs, wherein the suctioning of the air occurs on the top side (13) of the wind turbine rotor blade (1),
and a boundary layer fence (28) is provided in the hub region (111) close to the hub fastening means (17) in order to prevent a flow in the direction of the hub fastening means (17), wherein
the trailing edge (15) in the hub region (111) and at least in the first section of the adjoining middle region (112) is blunt, broad and/or truncated and tapers in the direction of the blade tip region (113), **characterized in that** said trailing edge is continued beyond the root region (11) in the direction of the blade tip (12),
the suction region (21) is arranged in the region in which a laminar air flow detaches from the top side (13) in a manner specific to the rotor blade geometry, so that a bearing and continuation of the laminar air flow against the further surface of the top side (13) occurs, and
the suction region (21), starting at or close to the boundary layer fence (28) in the hub region (111), extends into the middle region (112), wherein the suction region (21) is continued in the middle region (112) beyond the root region (11) in the direction of the blade tip (12).

2. Wind turbine rotor blade (1) according to claim 1, **characterized in that**
the suction region (21) has a plurality of suction segments which can be opened and closed and which are opened and/or closed as a function of a point of change (X) at which a laminar air flow detaches from the top side (13) in a manner specific to the rotor blade geometry, said point of change migrating as a result of a rotation of the rotor blade at the hub in order to adapt the work angle of the rotor blade to the wind, a variable suction line thus forming.

3. Wind turbine rotor blade (1) according to claim 1 or 2, **characterized in that**
the maximum blade depth (Smax) of the wind turbine rotor blade (1) is provided in the hub region (111) or in the first section of the middle region (112) and the blade depth (Sgr) decreases from the maximum blade depth (Smax) to the boundary layer fence (28).

4. Wind turbine rotor blade (1) according to claim 1, 2 or 3,
**characterized in that**
the suction region (21) is arranged in the surface section 40% of the local blade depth (Sx) from the leading edge (16) to 5% of the local blade depth (Sx) from the trailing edge (15).

5. Wind turbine rotor blade (1) according to claim 4, **characterized in that**
the suction region (21) is arranged in the hub region (111) in the surface section 40% of the local blade depth (Sx) from the leading edge (16) to 30% of the local blade depth (Sx) from the trailing edge (15).

6. Wind turbine rotor blade (1) according to any one of the preceding claims,
**characterized in that**
the blade inner body of the rotor blade (1) is used as an air-conducting channel.

7. Wind turbine rotor blade (1) according to any one of the preceding claims,
**characterized in that**
a rotor blade known in the prior art is modified by way of add-on components.

8. Wind turbine rotor blade (1) according to claim 7, **characterized in that**
the add-on components are of segmented design.

9. Wind turbine rotor blade (1) according to any one of the preceding claims,
**characterized in that**
the blade tip (12) of a rotor blade known in the prior art is modified by way of an add-on component which does not extend the overall length of the rotor blade.

10. Wind turbine rotor blade (1) according to any one of claims 1 to 9,
**characterized in that**
the blade tip (12) of a rotor blade known in the prior art is modified by way of an add-on component which extends the overall length of the rotor blade by 0.5 to 7 m.

11. Wind turbine rotor blade (1) according to any one of claims 8 to 10,
**characterized in that**
the segmented add-on components have at least one boundary layer fence section (28, 28').

12. Wind turbine rotor blade (1) according to any one of the preceding claims,
**characterized in that**
a valve for controlling the influencing of the boundary layer is arranged in the air-conducting channel (23).

13. Wind turbine rotor blade (1) according to any one of the preceding claims,
**characterized in that**
conveying means for actively influencing the boundary layer by conducting air within the air-conducting channel (23) are provided so that air can be transported both from the suction region (21) to the blow-out region (22) and also in the opposite direction.

14. Wind turbine rotor blade (1) according to any one of the preceding claims,
**characterized in that**
the openings of the suction region (21) and/or of the blow-out region (22) are designed as holes and/or slots.

## Revendications

1. Pale de rotor d'éolienne (1) comprenant une face supérieure (13), une face inférieure (14), un bord d'attaque (16), un bord de fuite (15), une fixation de moyeu (17) et une extrémité de pale (12), la pale de rotor d'éolienne (1) étant divisée en une zone de moyeu (111), une zone centrale (112) et une zone d'extrémité de pale (113) et une zone de pied (11) étant définie depuis la fixation de moyeu (17) jusqu'à la profondeur de pale maximale (Smax),
un conduit de guidage d'air (23) qui s'étend radialement vers l'extérieur étant prévu à l'intérieur de la pale de rotor d'éolienne (1) pour conduire l'air aspiré provenant d'une zone d'aspiration (21) jusqu'à une zone de soufflage (22) disposée dans la zone d'extrémité de pale (113) et une aspiration de couche limite étant effectuée, l'aspiration de l'air étant effectuée sur la face supérieure (13) de la pale de rotor d'éolienne (1),
une cloison de décrochage (28) étant prévue dans la zone de moyeu (11) à proximité de la fixation de moyeu (17) pour empêcher un écoulement en direction de la fixation de moyeu (17),
le bord de fuite (15) dans la zone de moyeu (111) et au moins dans la première section de la zone centrale (112) s'y raccordant étant obtus, large et/ou tronqué et se terminant en direction de la zone d'extrémité de pale (113), **caractérisée en ce que** ledit bord de fuite se poursuit en direction de l'extrémité de pale (12) au-delà de la zone de pied (11),
la zone d'aspiration (21) est disposée dans la zone dans laquelle un écoulement laminaire d'air se détache de la face supérieure (13) d'une manière spécifique à la géométrie de la pale de rotor, de sorte que l'écoulement laminaire d'air s'applique et se poursuit sur la suite de la surface de la face supérieure (13), et
la zone d'aspiration (21) s'étend en commençant au niveau ou à proximité de la cloison de décrochage (28) dans la zone de moyeu (111) jusque dans la zone centrale (112), la zone d'aspiration (21) se poursuivant au-delà de la zone de pied (11) dans la zone centrale (112) en direction de l'extrémité de pale (12).

2. Pale de rotor d'éolienne (1) selon la revendication 1, **caractérisée en ce que** la zone d'aspiration (21) comprend plusieurs segments d'aspiration pouvant être ouverts et fermés et qui sont ouverts et/ou fermés en fonction d'un point de transition d'écoulement (X) migrant par suite d'une rotation de la pale de rotor sur le moyeu en vue d'adapter l'angle d'attaque de la pale de rotor au vent, point de transition dans lequel un écoulement laminaire de l'air se détache de la face supérieure (13) d'une manière spécifique à la géométrie de la pale de rotor, une ligne d'aspiration pouvant être modifiée étant ainsi constituée.

3. Pale de rotor d'éolienne (1) selon la revendication 1 ou 2, **caractérisée en ce que** la profondeur de pale maximale (Smax) de la pale de rotor d'éolienne (1) est prévue dans la zone de moyeu (111) ou dans la première section de la zone centrale (112) et la profondeur de pale (Sgr) diminue depuis la profondeur de pale maximale (Smax) jusqu'à la cloison de décrochage (28).

4. Pale de rotor d'éolienne (1) selon la revendication 1, 2 ou 3, **caractérisée en ce que** la zone d'aspiration (21) est disposée dans la section de surface à 40% de la profondeur de pale locale (Sx) par rapport au bord d'attaque (16) jusqu'à 5 % de la profondeur de pale locale (Sx) par rapport au bord de fuite (15).

5. Pale de rotor d'éolienne (1) selon la revendication 4, **caractérisée en ce que** la zone d'aspiration (21) est disposée dans la zone de moyeu (111) dans la section de superficie à 40 % de la profondeur de pale locale (Sx) par rapport au bord d'attaque (16) jusqu'à 30 % de la profondeur de pale locale (Sx) par rapport au bord de fuite (15).

6. Pale de rotor d'éolienne (1) selon l'une des revendications précédentes, **caractérisée en ce que** le corps intérieur de pale de la pale de rotor (1) est utilisé comme conduit de guidage d'air.

7. Pale de rotor d'éolienne (1) selon l'une des revendications précédentes, **caractérisée en ce qu**'une pale de rotor connue de l'état de la technique est modifiée au moyen d'éléments rapportés.

8. Pale de rotor d'éolienne (1) selon la revendication 7, **caractérisée en ce que** les éléments rapportés sont conçus segmentés.

9. Pale de rotor d'éolienne (1) selon l'une des revendications précédentes, **caractérisée en ce que** l'extrémité de pale (12) d'une pale de rotor connue de l'état de la technique est modifiée par un élément rapporté ne rallongeant pas la longueur totale de la pale de rotor.

10. Pale de rotor d'éolienne (1) selon l'une des revendications 1 à 9, **caractérisée en ce que** l'extrémité de pale (12) d'une pale de rotor connue de l'état de la technique est modifiée par un élément rapporté rallongeant la longueur totale de la pale de rotor de 0,5 à 7 m.

11. Pale de rotor d'éolienne (1) selon l'une des revendications 8 à 10, **caractérisée en ce que** les éléments rapportés segmentés comportent au moins une section de cloison de décrochage (28, 28').

12. Pale de rotor d'éolienne (1) selon l'une des revendications précédentes, **caractérisée en ce qu**'une soupape permettant de commander l'influence sur la couche limite est disposée dans le conduit de guidage d'air (23).

13. Pale de rotor d'éolienne (1) selon l'une des revendications précédentes, **caractérisée en ce que** des moyens de refoulement permettant d'influencer de façon active la couche limite par un guidage d'air sont prévus à l'intérieur du conduit de guidage d'air (23), de sorte que l'air peut être transporté aussi bien de la zone d'aspiration (21) vers la zone de soufflage (22) que dans le sens opposé.

14. Pale de rotor d'éolienne (1) selon l'une des revendications précédentes, **caractérisée en ce que** les ouvertures de la zone d'aspiration (21) et/ou de la zone de soufflage (22) sont réalisées sous la forme de trous et/ou de fentes.
